# EUROPEAN PATENT APPLICATION

(11) **EP 2 149 406 A1**
(43) Date of publication of application: **03.02.2010**
(21) Application number: 07830329.4
(22) Date of filing: 23.10.2007
(51) Int. Cl.: B09B 3/00, A62D 3/36, A62D 101/41

(54) **METHOD OF ASBESTOS DETOXIFICATION AND AQUEOUS SOLUTION FOR ASBESTOS DETOXIFICATION**

(30) Priority: 30.05.2007 JP 2007143748
(71) Applicant: Sumitomo Osaka Cement Co., Ltd., Tokyo 102-8465 (JP)
(72) Inventor: SAKAKIBARA, Hiroyuki, Tokyo 102-8465 (JP); MATSUDA, Takashi, Tokyo 102-8465 (JP); KANAI, Kensuke, Tokyo 102-8465 (JP)
(74) Representative: Staudt, Hans-Peter
(86) International application number: PCT/JP2007/070595
(87) International publication number: WO 2008/146418

(57) **Abstract**

A method of asbestos detoxification in which an asbestos-containing waste material in any form is made harmless while preventing asbestos particles or dust from flying or scattering. The asbestos content can be easily reduced in a short time to 0.1 wt.% or lower, which is prescribed by the Ministry of Health, Labor, and Welfare. The waste can be perfectly made harmless. Also provided is an aqueous solution for asbestos detoxification which is for use in the method. The method of asbestos detoxification comprises: bringing an asbestos-containing waste material into contact with an aqueous treating solution containing at least one fluoride ion source selected from the group consisting of the fluorides of alkali metals, alkaline earth metals, and ammonia and hydrofluoric acid and further containing at least one mineral acid selected from the group consisting of hydrochloric acid, sulfuric acid, and nitric acid so that the aqueous treating solution has a pH of 1 or lower; and allowing the resultant mixture to stand or stirring it while adding the mineral acid so as to keep the pH of the aqueous treating solution at 1 or lower. Thus, the asbestos in the asbestos-containing waste material is made harmless.

## Description

### Technical Field

The present invention relates to a method of asbestos detoxification and an aqueous solution for asbestos detoxification, and in particular, to a method of asbestos detoxification according to which an asbestos containing waste material is dissolved in a fluoride ion containing aqueous solution having a certain pH value so that the asbestos is detoxified, as well as an aqueous solution for asbestos detoxification used in the same method.

### Background Art

Conventionally, asbestos has been widely used in various fields because its strength will not decrease over a long period of time, and thus, has been used in many things, such as slates, water pipes, fireproof coating materials, brake pads, gaskets, thermal plates, ropes, packings and fillers for acetylene tanks. In recent years, however, it has become clear that asbestos has been a factor in many health related illnesses, such as asbestos lung, lung cancer and malignant mesothelioma, and its usage has been banned.

In particular, conventional gypsum boards are excellent in fire resistance, sound insulation and heat retaining properties, and therefore, have been used in many fireproof coating materials, such as products to be sprayed, ceiling materials and wall materials, and those gypsum boards contain asbestos.
These asbestos containing materials have been used in a large amount, and it is dangerous to continue using them without any changes because of the above described environmental reasons, and thus, they must be urgently disposed of and detoxified in present situations.

The asbestos containing waste materials so far have been treated as general waste and are currently being disposed of as industrial waste, and this causes problems due to the flying and scattering of asbestos, which calls for safe measures,
In addition, the asbestos containing waste materials have not been used effectively at present.

In particular, the demolition of buildings having asbestos containing materials, such as gypsum boards, as fireproof coating materials or ceiling boards is at its peak, and the exposure and the flying and scattering of asbestos makes the problems more serious.

Asbestos is naturally produced mineral fibers, and chrysotile in serpentine (3MgO · 2SiO₂ · 2H₂O), amosite in amphibole ((Mg, Fe)₇Si₈O₂₂(OH)₂), crocidolite (Na₂Fe₃²⁺Fe₂³⁺Si₈O₂₂(OH)₂), anthophyllite (Mg₇Si₈O₂₂(OH)₂), tremolite (Ca₂Mg₅Si₈O₂₂(OH)₂) and actinolite (Ca₂(Mg, Fe)₅Si₈O₂₂(OH)₂) can be cited as examples.
It is known that chrysotile in serpentine is dehydrated and metamorphoses at approximately 700 °C when heated and converted to forestlite (2MgO · S1O₂), which is harmless, at approximately 900 °C. In reality, however, it is difficult to detoxify chrysotile, and accordingly, its effective use has not been sufficiently achieved.

The toxicity of asbestos originates from its fibers, and the following methods have been proposed as methods for altering and detoxifying fibers through fusion.
Japanese Unexamined Patent Publication 2005-279589 (Patent Document 1) describes a method for processing a slate waste material **characterized in that** an asbestos containing slate waste material is submerged in an aqueous solution of a fusing agent made of borax, a mixture of boric acid and sodium carbonate, or a mixture of borax and sodium carbonate without being crushed, and this is placed under reduced pressure so that the fusing agent enters into the slate waste material through the surface and the spaces in the slate are immersed with the fusing agent, and thus, a preprocess is carried out, and after that, the preprocessed slate waste material is immersed in a melting furnace that is filled with a fusing agent that is heated to a temperature range from 780 °C to 1000 °C so that the asbestos in the slate waste material is melted and converted to glass.

Furthermore, Japanese Unexamined Patent Publication 2006-52117 (Patent Document 2) describes a method for processing an inorganic waste material **characterized in that** an inorganic waste material is put into a kiln for manufacturing cement together with materials for manufacturing cement and heat treatment is carried out so that the inorganic waste material is converted to cement, wherein the size of the waste material is adjusted so that the minimum value is 1 mm or greater, the maximum value is 1/10 of the inner diameter of the kiln for manufacturing cement or less, and any points inside the waste material have the minimum distance to the surface as 30 mm or less, the ratio of the waste material occupied in the total amount of the waste material and the cement materials is in a range from 1 % to 20 % of the mass ratio in a dry state, the waste material is put into the kiln for manufacturing cement together with the materials for manufacturing cement through the bottom of the kiln, and heat treatment is carried out at 1000 °C to 1500 °C for 20 minutes to 60 minutes so that a sintered body is gained, and the thus gained sintered body is converted to a powder.

In the conventional methods described in the above Patent Documents, asbestos containing waste materials are put into a melting furnace or a cement kiln so as to be detoxified.
When an asbestos containing waste is supplied to a melting furnace or a cement kiln, however, asbestos cannot be prevented from flying or scattering, and in the above described conventional methods, asbestos containing waste materials are crushed or decomposed or microscopic cracks are created as a preprocess, and therefore, a mechanical means is mainly used such that asbestos containing waste materials are destroyed using heavy machinery, which ends up flying and scattering asbestos, and thus, problems with asbestos affecting the body's health during the process of detoxification have not been sufficiently resolved at present.
Furthermore, energy consumption is high because melting is necessary during the process of detoxification.

In addition, Japanese Patent No. 3418989 (Patent Document 3), Japanese Patent No. 3418990 (Patent Document 4) and Japanese Patent No. 3418991 (Patent Document 5) disclose methods for removing asbestos, including the steps of adding 30 wt % of inorganic acid, a salt of inorganic acid or a mixture of these, particularly phosphoric acid or a phosphate, and 0.1 % to 4 % of alkali metal, alkaline earth metal, tetrafluoroborate of ammonia, a fluoride ion source that includes hexafluorosilicate, or a mixture of these, and leaving the warm asbestos in contact, with the building material containing warm asbestos for a sufficient amount of time for the coexisting warm asbestos to be reduced to less than 1 %.

These methods of detoxification using an acid treatment liquid described in Patent Documents 3 to 5 are satisfactory in the case where the asbestos content is 1 wt % or less, that is to say, asbestos is reduced to 1 wt %, and these methods were invented in accordance with the standard by the United States Environmental Protection Agency, who defines that the "asbestos containing material is a material which contains asbestos that exceeds 1 wt %."

In Japan, however, the weight ratio of the asbestos content considered harmful was changed from 1 wt % to 0.1 wt %, which is the international level, starting from September 1, 2006 (standard by the Ministry of Health, Labor and welfare), and this standard cannot be easily cleared in accordance with the above described methods, which are unsatisfactory for detoxifying asbestos under the current regulations.
Patent Document 1: Japanese Unexamined Patent Publication 2005-279589
Patent Document 2: Japanese Unexamined Patent Publication 2006-52177
Patent Document. 3: Japanese Patent No. 3418989
Patent Document 4: Japanese Patent No. 3418990
Patent Document 5: Japanese Patent No. 3418991

### Disclosure of the Invention

### Problem to be Solved by the Invention

An object of the present invention is to solve the above described problems and provide a method of asbestos detoxification in which an asbestos containing waste material in any form is completely detoxified while preventing asbestos particles or dust from flying or scattering so that the asbestos content, can be easily reduced in a short time to 0.1 wt % or lower, which is prescribed by the Ministry of Health, Labor and Welfare, as well as an aqueous solution for asbestos detoxification, which is for use in the method.
In particular, in the case where the asbestos containing waste material is slates, a process at a high temperature for a long period of time is necessary with poor efficiency in detoxification according to the prior art. In contrast to this, the invention provides a method of asbestos detoxification in which an asbestos containing waste material can be completely detoxified so that the asbestos content, can be reduced in a short time to 0.1 wt % or lower, which is prescribed by the Ministry of Health, Labor and Welfare, as well as an aqueous solution for asbestos detoxification, which is for use in the method.

### Means for Solving Problem

The present inventors found that the above described object can be achieved when an asbestos containing waste material is brought into contact with an aqueous solution for asbestos detoxification which contains a certain mineral acid and fluoride and has a certain pH, and more preferably, the amount of the fluoride added to the aqueous solution is in a certain range as calculated by the ion concentration of a fluoride, and thus, arrived at the present invention.

The method of asbestos detoxification according to Claim 1 of the present invention is a method of asbestos detoxification, **characterized in that** an asbestos containing waste material is brought into contact with an aqueous solution to which at least one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added so that the gained aqueous solution has a pH of 1 or lower, and the resultant mixture is left still or stirred so that the asbestos in the asbestos containing waste material is detoxified.

The method of asbestos detoxification according to Claim 2 of the present invention is a preferable method of asbestos detoxification according to Claim 1, **characterized in that** said fluoride is added so that the fluoride ion concentration in the aqueous solution becomes 1.5 wt % to 10 wt % when the entirety of the ion source is dissociated.

The method of asbestos detoxification according to Claim 3 of the present invention is a more preferable method of asbestos detoxification according to Claim 1 or 2, **characterized in that** the mixture ratio of the aqueous solution to the asbestos containing waste material is 3 to 100 in the weight ratio.

The aqueous solution for asbestos detoxification according to the present invention is an aqueous solution for asbestos detoxification, **characterized in that** at least, one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added, and the pH is 1 or lower.

The aqueous solution for asbestos detoxification according to Claim 5 of the present invention is a preferable aqueous solution for asbestos detoxification according to Claim 4, **characterized in that** said fluoride is added so that the fluoride ion concentration in the aqueous solution becomes 1.5 wt % to 10 wt % when the entirety of the ion source is dissociated.

### Effects of the Invention

In accordance with the method of asbestos detoxification according to the present invention, an asbestos containing waste material can be safely detoxified while effectively preventing asbestos particles or dust from flying or scattering so that the asbestos content can be easily reduced in a short time to 0.1 wt % or lower, which is prescribed by the Ministry of Health, Labor and Welfare.
In addition, the aqueous solution for asbestos detoxification, according to the present invention can allow the asbestos content, in an asbestos containing waste material to be effectively reduced in a short, time to 0.1 wt % or lower, which is prescribed by the Ministry of Health, Labor and Welfare, and thus, can be effectively used in the above described method of asbestos detoxification according to the present invention.

### Best Mode for Carrying Out the Invention

Though the present invention is described on the basis of the following embodiments, the invention is not limited to these.
In accordance with the method of asbestos detoxification, according to the present invention, an asbestos containing waste material is brought into contact, with an aqueous solution to which at least one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added so that the gained aqueous solution has a pH of 1 or lower, and the resultant mixture is left still or stirred so that the asbestos in the asbestos containing waste material is detoxified.

When subjected to this method, the needle-form structure of asbestos is destroyed so that asbestos is converted to a non-asbestos containing material, and thus, detoxification is achieved.
Accordingly, the thus processed asbestos containing waste material can be treated as a detoxified waste material that can be handled safely.
Here, the detoxified asbestos is in such a state where chrysotile, crocidolite or amosite having a needle-form crystal is transformed into another substance as a result of the reaction between asbestos and acid, and in this state, the material becomes harmless to the human body from the point of view of there being no flying and scattering of asbestos.

First, the aqueous solution for detoxification used in the method of asbestos detoxification according to the present invention is described.
The aqueous solution for detoxification according to the present invention is an aqueous solution for asbestos detoxification, wherein at least one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added, and the pH is 1 or lower.

Here, any aqueous mineral acid other than phosphoric acid can be used as the mineral acid, and in particular, any mineral acid from among hydrochloric acid, sulfuric acid, nitric acid and a mixed acid of these is preferable for use because they may dissolve a cement based binder having a high pH contained in the waste material.
Phosphoric acid is too weak of an acid to achieve the object of the present invention and not appropriate for use according to the present invention from this point of view.

The mineral acid is mixed in so that the resultant aqueous solution has a pH of 1 or lower.
This is because it takes too long to dissolve the cement based binder having a high pH contained in the waste material when the pH of the resultant aqueous solution exceeds 1.
In addition, it is preferable for the pH of the solution to always be maintained at 1 or lower while the asbestos in the asbestos containing waste material is being detoxified using this aqueous solution, that is to say, while the aqueous solution and the asbestos containing waste material are brought into contact, with each other through immersion because the time for dissolving the cement based binder having a high pH contained in the waste material can be shortened, and this can be achieved by adding the same mineral acid as that contained in the aqueous solution if necessary while the asbestos containing waste material is being detoxified.

The aqueous solution for asbestos detoxification according to the present invention additionally contains at least one type selected from the group consisting of the fluorides of alkali metals, alkaline earth metals and ammonia, and hydrofluoric acid, concretely, at least one type of water soluble fluoride.
Fluorides and difluorides of alkali metals, alkaline earth metals and ammonia as well as mixtures of these can be cited as examples of the fluoride.
The fluorides that are particularly appropriate for use are ammonium fluoride and hydrofluoric acid.

The SiO₂ skeleton of asbestos can be destroyed when the aqueous solution contains such a fluoride.
The amount of fluoride to be added is such that the ion concentration of the fluoride in the aqueous solution is 1.5 wt % to 10 wt %, preferably 2.5 wt % to 7 wt %, in the case where the fluoride, which is the ion source, is completely dissociated.
When such an amount of fluoride is added, such working effects can be gained that the SiO₂ skeleton of asbestos can be efficiently dissolved.

When an asbestos containing waste material and the above described aqueous solution are brought into contact with each other, concretely, an asbestos containing waste material is submerged in the aqueous solution, which is left still or stirred, the asbestos in the asbestos containing waste material and the aqueous solution can make contact effectively so that detoxification can be achieved.

At this time, the pH of the aqueous solution must be maintained at 1 or lower, and as for the method for maintaining this, such a method can be cited as an example where an appropriate amount of the same mineral acid as that contained in the aqueous solution is added during the detoxification, and thus, the pH can be maintained at 1 or lower.

The mixture ratio of the aqueous solution to the asbestos containing waste material during the asbestos detoxification according to the present invention can be set to an appropriate value depending on the amounts of asbestos and the cement based binder contained in the asbestos containing waste material, preferably 3 to 100 in weight ratio, and more preferably 5 to 20.
When the weight ratio is within the above described range, the pH of the aqueous solution can be prevented from increasing as a result of the reaction between the mineral acid and the cement based binder, making a further reduction in the time for processing possible with an increased efficiency in processing. In addition, the treatment cost of the waste liquid after detoxification can be kept lower.

Asbestos containing waste materials that can be detoxified according to the present invention include any asbestos containing waste materials used as a construction material, such as asbestos containing slates and waste materials sprayed with an asbestos containing material, in addition to asbestos itself. In particular, waste materials resulting when the products sprayed with an asbestos containing material are broken down where a large amount of discharge is expected in the future, causing a major problem of asbestos flying and scattering, can also be effectively treated.

In addition, collected asbestos containing slates include organic additives, such as pulp fibers and glues, which can easily be separated when the residue after treatment with the mineral acid is filtered in the case where the present invention is applied.

In addition, it is preferable for the asbestos detoxification according to the present invention to be carried out such that an asbestos containing waste material is treated with acid after the asbestos containing waste material is broken down and crushed in an airtight state.
Here, the airtight state means a state where asbestos does not make direct contact with outside air (excluding air within the airtight space) in the work environment and states that can be achieved using a breaking/crushing machine that can be contained in an airtight case, a transportation means from a breaking/crushing machine to a detoxification container that can be contained in an airtight case, and a detoxification container that can be contained in an airtight case, as well as a state where an asbestos containing waste material is submerged in an aqueous solution for detoxification, can be cited as appropriate examples.

As for the means for breaking/crushing an asbestos containing waste material, publicly-known means for breaking/crushing a construction waste material can be used.
In particular, impact crushers, hammer crushers, ball mills, vertical mills and tower mills can be cited as examples having such a specification that the individual apparatus can be contained in an airtight case.
As a result, an asbestos containing waste material having a particularly large dimension, such as slates, can be easily detoxified in such a manner that the asbestos is converted to non-asbestos through the above described acid treatment, and in addition, it is possible to shorten the time for detoxification.

As other methods for breaking/crushing an asbestos containing waste material in an airtight, state, a method for providing a breaking/crushing machine, a transportation means and an acid treatment container which can be contained in an airtight case, and covering these apparatuses with one airtight case, and a method for providing a breaking/crushing machine, a transportation means and an acid treatment container in an airtight state individually and connecting the apparatuses to each other so that the connections are sealed can be cited as examples.

In particular, in the case where an asbestos containing waste material is immersed in the aqueous solution according to the present invention so as to be broken down and crushed, the step of breaking/crushing the material, with the asbestos being wet and prevented from flying and scattering, and the acid treatment step of converting the asbestos containing waste material into non-asbestos containing material so as to be detoxified can be carried out simultaneously.
In addition, when an asbestos containing waste material is in a wet state with at least the aqueous solution, it is sufficient to prevent asbestos from flying and scattering, and therefore, the asbestos containing waste material may be broken down and crushed when the state of being immersed in the aqueous solution is maintained as described above, or the asbestos containing waste material may be broken down and crushed after being taken out of the acid as long as it is in a wet state as a result of immersion in the aqueous solution.

### Examples

The present invention is described on the basis of the following examples and comparative examples.
Here, the ion concentration of a fluoride is indicated as the value in the case where the added fluoride is 100 % dissociated in the examples and comparative examples.
In addition, "parts" means weight parts and "%" means wight percent unless otherwise stated.
In addition, the quantitative analysis of asbestos is a value measured in accordance with JIS A 1481 "method for Measuring Asbestos Consent in Construction Materials."
In addition, the lower limit values of the respective asbestos types in the X-ray spectrometer (X' pert pro, made by the Panalitical B.V. of Spectris Co., Ltd.) used for the quantitative analysis are 0.026 % for chrysotile, 0.008 % for amosite and 0.012 % for crocidolite.

### Example 1

20 parts of the respective standard asbestos samples (standard samples available by Japan Association for Working Environment Measurement) of chrysotile, amosite and crocidolite were immersed in a solution (hydrogen ion concentration: 2.81 mol/L · pH = "0.45, fluoride ion concentration: 27000 mg/L = 1.4 mol/L · 2.9 %) with 95 parts of a 10 % hydrochloric acid aqueous solution (35 % solution made by Kanto Chemical Co., Inc. was distilled) and 5 parts of ammonium fluoride (made by Kanto Chemical Co., Inc.) so as to be dissolved at 40 °C for three hours, and thus, the respective ratios of residual asbestos were no higher than the above described quantitative lower limit.

### Example 2

20 parts of the respective cement based boards containing 3.4 % of chrysotile, 36.2 % of amosite and 8.1 % of crocidolite were immersed in a solution (hydrogen ion concentration: 2.81 mol/L · pH = -0.45, fluoride ion concentration: 27000 mg/L = 1.4 mol/L · 2.9 %) with 95 parts of a 10 % hydrochloric acid aqueous solution (35 % solution made by Kanto Chemical Co., Inc. was distilled) and 5 parts of ammonium fluoride (made by Kanto Chemical Co., Inc.) so as to be dissolved at 40 °C for three hours, and thus, the respective ratios of residual asbestos were no higher than the above described quantitative lower limit.

### Example 3

20 parts of the respective standard asbestos samples (standard samples available by Japan Association for Working Environment Measurement) of chrysotile, amosite and crocidolite were immersed in a solution (hydrogen ion concentration: 2.81 mol/L · pH = -0.45, fluoride ion concentration: 23000 mg/L = 1.4 mol/L · 2.4 %) with 95 parts of a 10 % hydrochloric acid aqueous solution (35 % solution made by Kanto Chemical Co., Inc. was distilled) and 5 parts of 46 % hydrofluoric acid (made by Kanto Chemical Co., Inc.) so as to be dissolved at 40 °C for three hours, and thus, the respective ratios of residual asbestos were no higher than the above described quantitative lower limit.

### Comparative Example 1

20 parts of the respective standard asbestos samples (standard samples available by Japan Association for Working Environment. Measurement) of chrysotile, amosite and crocidolite were immersed in a 10 % hydrochloric acid aqueous solution (made by Kanto Chemical Co., Inc., hydrogen ion concentration: 2.9 mol/L · pH = -0.46) so as to be dissolved at 40 °C for three hours, and thus, the respective ratios of residual asbestos were 37.9 % for chrysotile, 47.2 % for amosite and 47.6 % for crocidolite.

### Comparative Example 2

20 parts of the respective standard asbestos samples (standard samples available by Japan Association for Working Environment Measurement) of chrysotile, amosite and crocidolite were immersed in a solution (hydrogen ion concentration 0.16 mol/L · pH = 0.8, fluoride ion concentration: 12000 mg/L = 0.6 mol/L · 1.3 %) with 98 parts of a 40 % phosphoric acid aqueous solution (85 % solution made by Kanto Chemical Co., Inc. was distilled) and 2 parts of sodium silicofluoride (made by Kanto Chemical Co., Inc.) so as to be dissolved at 40 °C for three hours, and thus, the respective ratios of residual asbestos were 6.7 % for chrysotile, 24.4 % for amosite and 49.5 % for crocidolite.

### Comparative Example 3

20 parts of the respective cement based boards containing 3.4 % of chrysotile, 36.2 % of amosite and 8.1 % of crocidolite were immersed in a solution (hydrogen ion concentration: 0.16 mol/L · pH = 0.8, fluoride ion concentration: 12000 mg/L = 0.6 mol/L · 1.3 %) with 98 parts of a 40 % phosphoric acid aqueous solution (85 % solution made by Kanto Chemical Co., Inc. was distilled) and 2 parts of sodium silicofluoride (made by Kanto Chemical Co., Inc.) so as to be dissolved at 40 °C for three hours, and thus, the respective ratios of residual asbestos were 1.2 % for chrysotile, 19.3 % for amosite and 3.9 % for crocidolite.

### Industrial Applicability

The method of asbestos detoxification according to the present invention can be applied to the treatment of various types of asbestos containing materials in addition to waste slates and makes a quick and safe means of waste disposal possible.
In addition, it is possible to apply the invention to the manufacture of cement where the waste material is reused.

## Claims

1. A method of asbestos detoxification, **characterized in that** an asbestos containing waste material is brought into contact, with an aqueous solution to which at least, one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added so that the gained aqueous solution has a pH of 1 or lower, and the resultant mixture is left still or stirred so that the asbestos in the asbestos containing waste material is detoxified.

2. The method of asbestos detoxification according to Claim 1, **characterized in that** said fluoride is added so that the fluoride ion concentration in the aqueous solution becomes 1.5 wt % to 10 wt % when the entirety of the ion source is dissociated.

3. The method of asbestos detoxification according to Claim 1 or 2, **characterized in that** the mixture ratio of the aqueous solution to the asbestos containing waste material is 3 to 100 in the weight ratio.

4. An aqueous solution for asbestos detoxification, **characterized in that** at least one type of fluoride selected from the group consisting of the fluorides of alkali metals, alkaline earth metals and ammonia and hydrofluoric acid, and at least one type of mineral acid selected from the group consisting of hydrochloric acid, sulfuric acid and nitric acid are added, and the pH is 1 or lower.

5. The aqueous solution for asbestos detoxification according to Claim 4, **characterized in that** said fluoride is added so that the fluoride ion concentration in the aqueous solution becomes 1.5 wt % to 10 wt % when the entirety of the ion source is dissociated.

## Amended claims

### Amended claims under Art. 19.1 PCT

1. (Amended) A method of asbestos detoxification, **characterized in that** an asbestos containing waste material is brought into contact with an aqueous solution to which at least one type of fluoride selected from the group consisting oaf the fluorides of alkali metals, alkaline earth metals and ammonia and hydrofluoric acid is added, and hydrochloric acid and/or nitric acid is added so that the gained aqueous solution has a pH of 1 or lower, and the resultant, mixture is left still or stirred so that the asbestos in the asbestos containing waste material is detoxified.

2. The method of asbestos detoxification according to Claim 1, **characterized in that** said fluoride is added so that the fluoride ion concentration in the aqueous solution becomes 1.5 wt % to 10 wt % when the entirety of the ion source is dissociated.

3. The method of asbestos detoxification according to Claim 1 or 2, **characterized in that** the mixture ratio of the aqueous solution to the asbestos containing waste material is 3 to 100 in the weight ratio.

4. (Amended) An aqueous solution for asbestos detoxification, **characterized in that** at least one type of fluoride selected from the group consisting of the fluorides of alkali metals, alkaline earth metals and ammonia and hydrofluoric acid, and hydrochloric acid and/or nitric acid are added, and the pH is 1 or lower.

5. The aqueous solution for asbestos detoxification according to Claim 4, **characterized in that** said fluoride is added so that the fluoride ion concentration in the aqueous solution becomes 1.5 wt % to 10 wt % when the entirety of the ion source is dissociated.
